Europäisches Patentamt

European Patent Office

Office européen des brevets

(11) Numéro de publication: **0 368 807**
**A1**

## DEMANDE DE BREVET EUROPEEN

(21) Numéro de dépôt: 89810830.3

(22) Date de dépôt: 03.11.89

(51) Int. Cl.⁵ **B65G 19/02, B65G 35/06**

(30) Priorité: 10.11.88 FR 8814976

(43) Date de publication de la demande:
16.05.90 Bulletin 90/20

(84) Etats contractants désignés:
AT BE CH DE ES FR GB IT LI NL SE

(71) Demandeur: ISM EQUIPEMENTS INDUSTRIELS
DE MONTAGE S.A.
Route de Neuchâtel
CH-1032 Romanel(CH)

(72) Inventeur: Miletto, Philippe

CH-2115 Buttes(CH)

(74) Mandataire: Nithardt, Roland
CABINET ROLAND NITHARDT 15, rue
Edouard Verdan
CH-1400 Yverdon-les-Bains(CH)

(54) Installation de transfert comportant un circuit fermé de rails.

(57) La présente invention concerne une installation de transfert comportant un circuit fermé de rails et de palettes circulant sur ces rails.

Chaque palette (14) comporte au moins deux roues d'entraînement (15) qui sont destinées à s'appuyer sur les rails et à être entraînées par une courroie (16). Ces roues d'entraînement comportent un axe central (24) sur lequel est monté un galet entraîneur (30) et un galet entraîné (35) disposé à la périphérie du galet entraîneur et séparé de ce dernier par un palier (36).

Ce montage permet d'éviter l'usure du rail ou des galets lorsque la palette est à l'arrêt et que la courroie continue à tourner et à entraîner les roues d'entraînement.

FIG. 4

EP 0 368 807 A1

## INSTALLATION DE TRANSFERT COMPORTANT UN CIRCUIT FERME DE RAILS

La présente invention concerne une installation de transfert comportant un circuit fermé de rails, au moins une palette agencée pour se déplacer sur ce circuit, au moins une courroie d'entraînement agencée pour mouvoir ladite palette sur ledit circuit, cette palette comportant au moins deux roues d'entraînement à axes perpendiculaires au plan de la palette, ces roues étant d'une part en contact avec ladite courroie d'entraînement, et d'autre part en appui contre un rail dudit circuit.

Dans les installations de transfert connues, du type de celles qui comportent des rails sur lesquels des palettes de transport de pièces et/ou de montage et d'assemblage de ces pièces sont entraînées par une courroie d'entraînement, les palettes comportent habituellement au moins deux roues d'entraînement qui sont en contact permanent avec ladite courroie d'entraînement et qui prennent appui contre un rail qui constitue un élément de guidage latéral. Dans la pratique, la courroie passe dans une gorge de ces roues et, de par son élasticité, appuie ces dernières contre l'élément de guidage, ce qui a pour effet de déplacer les palettes en faisant rouler les roues d'entraînement sur l'élément de guidage. Ces roues ont en général un profil étudié pour que les deux fonctions : support de palettes et entraînement de ces palettes soient assurées simultanément. Toutefois, ces deux fonctions pourraient être dissociées et la fonction support pourrait être assurée par des roulettes tout à fait classiques.

Au cours du fonctionnement, les palettes subissent des variations de trajectoire et des variations de vitesse qui sont programmées selon les pièces transportées par ces palettes et selon les opérations de montage, d'assemblage, voire d'usinage que doivent subir ces pièces. Il est courant que les palettes s'arrêtent dans différentes stations dites manuelles où un opérateur effectue une intervention manuelle, ou dans des stations dites automatiques où les pièces sont soumises à l'action d'une machine commandée automatiquement telle qu'une perceuse, une machine à visser, à riveter, à souder etc.

Or au cours de ces arrêts des palettes, la courroie continue à être entraînée ce qui a pour effet de faire tourner les roues d'entraînement qui sont par ailleurs en appui contre l'élément de guidage. Quand la palette est à l'arrêt, les roues d'entraînement ne peuvent pas rouler sur l'élément de guidage, mais frottent contre cet élément, ce qui a pour conséquence soit d'user l'élément de guidage, soit d'user les roues, soit encore d'user la courroie d'entraînement si cette dernière glisse sur la roue sans parvenir à l'entraîner en raison de l'existence d'une forme de friction trop élevée entre la roue et l'élément de guidage.

Cette usure est extrêmement gênante et constitue un inconvénient grave des équipements connus à ce jour. Un arrêt prolongé des palettes peut aboutir à un échauffement tel qu'il engendre une fusion superficielle locale des roues ou de l'élément de guidage, qui sont habituellement réalisés en matière synthétique.

La présente invention se propose de pallier ces inconvénients en réalisant une installation dans laquelle l'arrêt momentané des palettes au cours du fonctionnement de cette installation ne risque pas de provoquer un échauffement et/ou une usure susceptible d'endommager les roues d'entraînement, l'élément de guidage et/ou la courroie d'entraînement.

Ce but est atteint par l'installation selon l'invention caractérisée en ce que lesdites roues d'entraînement comportent chacune au moins un axe intérieur fixé à la palette perpendiculairement à son plan, un galet entraîneur monté en rotation libre sur cet axe et agencé pour être en contact avec ladite courroie, un palier monté sur ledit galet entraîneur et un galet entraîné monté à la périphérie dudit palier et agencé pour être en appui contre ledit rail.

Selon un mode de réalisation particulier, la courroie d'entraînement est lisse et de section circulaire et le galet entraîneur comporte une gorge dont le profil correspond à la forme de la section circulaire de ladite courroie.

Selon une variante de réalisation, le galet entraîneur comporte une gorge équipée de cannelures.

Selon un autre mode de réalisation, la courroie est crantée et le galet entraîneur comporte des dents dont le profil correspond aux crans de la courroie.

Selon une forme de réalisation avantageuse, le rail présente un profil denté de crémaillère et le galet entraîné comporte des dents agencées pour engrener celles du rail.

La présente invention sera mieux comprise en référence à la description d'un exemple de réalisation du dessin annexé dans lequel :

la fig. 1 représente une vue de dessus d'un tronçon rectiligne de l'installation selon l'invention,

la fig. 2 représente une vue en coupe selon la ligne I-I de la fig. 1 de l'installation selon l'invention,

la fig. 3 représente une vue en plan d'un tronçon courbe de l'installation selon l'invention, et

la fig. 4 illustre une vue en coupe d'une roue d'entraînement de l'installation selon l'invention.

En référence aux figures, l'installation comprend une structure portante composée de profilés support 10 sur laquelle est monté un circuit fermé constitué de préférence de rails 11 et d'un organe porteur 12 équipé d'une succession de roulettes 13 ou de rouleaux rotatifs montés en roue libre. Cet organe d'appui peut être remplacé dans certaines réalisations par un second rail ou par une surface d'appui appropriée.

Des palettes 14 sont conçues pour circuler sur le circuit fermé et plus particulièrement pour s'appuyer sur les rails 11 et sur les roulettes 13. A cet effet, la palette comporte deux roues d'entraînement 15 qui seront décrites plus en détail en référence à la fig. 4. Ces roues d'entraînement sont en contact permanent avec une courroie d'entraînement 16 qui a de préférence une section circulaire et des caractéristiques élastiques. Par ailleurs, elles sont en appui contre les rails 11 qui constituent, dans l'exemple représenté, à la fois un élément de guidage et un élément porteur de la palette. On notera que ces deux fonctions pourraient être assurées par deux éléments différents. Dans le cas où l'organe d'appui est remplacé par un rail ou une surface d'appui, la palette peut comporter au moins un et de préférence deux ou plusieurs éléments de roulement conçus pour s'appuyer sur ce rail ou cette surface d'appui, et qui peuvent être constitués de roulettes, de rouleaux, de billes, de patins de glissement etc.

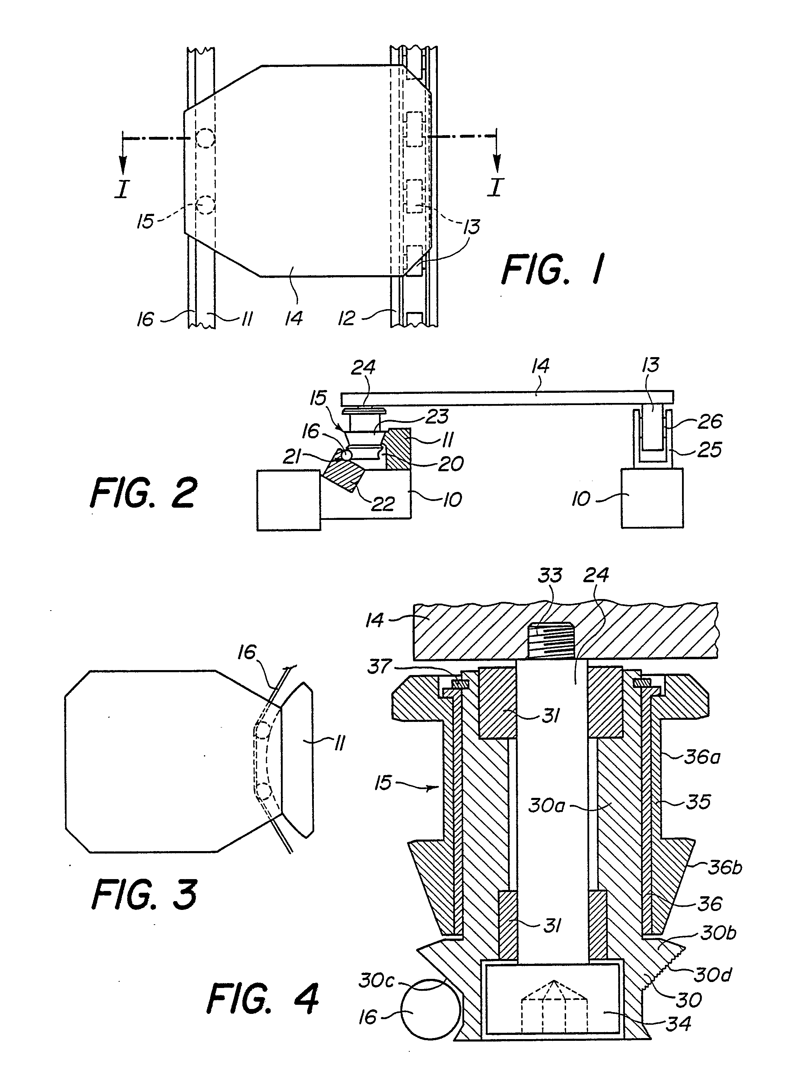

Comme le montre plus particulièrement la fig. 2, les roues d'entraînement 15 comportent une gorge concave ayant par exemple une section semi-circulaire 20 dans laquelle vient se loger la courroie d'entraînement 16 qui, sur un tronçon rectiligne, glisse dans un caniveau 21 de section sensiblement semi-circulaire ménagé dans une pièce de guidage 22 supportée par les profilés 10 de la structure portante. Par ailleurs, les roues d'entraînement 15 comportent une section tronconique 23 agencée pour définir la surface d'appui qui coopère avec les rails 11. La forme de cette section pourrait être différente, par exemple cylindrique. Les roues d'entraînement 15 sont portées par un axe 24 perpendiculaire au plan de la palette 14. Dans les installations connues, les roues d'entraînement comportent d'une part l'axe fixe 24 et une pièce moulée unique, librement rotative sur cet axe, qui est conçue de manière à former à la fois la gorge de contact avec la courroie et la surface d'appui contre le rail. '

Comme le montre la fig. 2, les roulettes 13 sont portées par un profilé 25 en forme de U qui est lui-même supporté par les profilés 10 de la structure portante. Les roulettes 13 sont montées sur un axe transversal 26 et tournent en roue libre.

La fig. 3 représente un tronçon courbe de l'installation décrite ci-dessus. Dans ce cas, la courroie, qui est logée dans la gorge semi-circulaire 20 des roues d'entraînement, passe "à l'intérieur" de la palette et crée, par son élasticité, une force d'appui relativement élevée des roues d'entraînement contre l'élément de guidage constitué par des tronçons curvilignes des rails 11.

On comprend aisément que si les palettes sont arrêtées le long d'un tronçon courbe de l'installation, la courroie, qui continue à tourner pendant l'arrêt de ces palettes, provoque une friction élevée des roues d'entraînement sur l'élément de guidage, ce qui peut avoir pour conséquence une usure mécanique ou un échauffement exagéré des deux matières en contact et accessoirement une usure ou une fatigue prématurée de la courroie.

Ce problème a été réglé de manière satisfaisante par la construction de roues d'entraînement telles que représentées par la fig. 4. Chaque roue d'entraînement comporte comme précédemment un axe central 24 solidaire de la palette et perpendiculaire à son plan. Sur cet axe 24 est monté un galet entraîneur 30 au moyen de deux paliers 31 et 32. L'axe central 24 comporte un embout fileté 33 qui se visse dans un alésage fileté de la palette et une tête 34, du type Imbus, qui assure le maintien en place du palier 31. Un galet entraîné 35 est monté à la périphérie du galet entraîneur 30 après interposition d'un palier 36 ayant un profil sensiblement tubulaire. Le galet entraîneur comporte une section 30a qui est sensiblement cylindrique, de manière à présenter une surface périphérique cylindrique dont le diamètre est sensiblement égal au diamètre intérieur du palier 36, et une section profilée 30b qui comporte une gorge 30C destinée à recevoir la courroie d'entraînement 16. Cette gorge peut avoir un profil semi-circulaire ou, comme le montre la fig. 4, une section à facettes rectilignes. La surface d'une ou plusieurs des facettes par exemple 30d peut être striée, cannelée, sablée pour améliorer le contact entre la courroie et le galet entraîneur.

Le galet entraîné comporte une surface intérieure cylindrique dont le diamètre est sensiblement égal au diamètre extérieur du palier 36 et un profil extérieur définissant une gorge 36a en forme de U et une section 36b qui est dans ce cas tronconique, mais qui pourrait avoir un autre profil et qui définit une surface d'appui destinée à coopérer avec la surface active des rails 11.

Un circlips 37 assure le maintien en position du palier 36 sur le galet entraîneur 30.

Grâce à la réalisation de la roue d'entraînement au moyen de ces trois éléments qui sont le galet entraîneur, le palier et le galet entraîné, en cas d'arrêt d'une palette le galet entraîneur peut continuer à être entraîné alors que le galet entraîné reste immobile en appui contre le rail grâce à l'existence du palier. Il est bien entendu que la friction entre les surfaces du palier et les surfaces correspondantes du galet entraîneur et du galet entraîné est plus faible que l'effet de friction du galet entraîneur avec sa courroie et que la friction du galet entraîné avec son appui. Elle est toutefois suffisante pour assurer, au cours du fonctionnement normal de l'installation, l'entraînement du galet entraîné par le galet entraîneur par l'intermédiaire du palier. On constate d'ailleurs que les forces d'entraînement croissent avec l'augmentation de la charge des palettes, ce qui s'explique par le principe de Newton qui fait que la réaction augmente proportionnellement à l'action, l'action correspondant à la charge de la palette et la réaction à la force d'entraînement transmise au galet entraîné.

Grâce à cette construction, le but recherché est atteint. ce qui permet de supprimer la cause principale de l'usure des éléments de guidage constitués par les rails, des roues d'entraînement et de la courroie des installations existantes. Il est bien entendu que le profil des surfaces périphériques des galets entraîneur et entraîné peut être modifié selon les utilisations et le mode de réalisation. Le galet entraîneur peut avoir un profil lisse ou cannelé. La courroie peut être lisse ou crantée. Le galet entraîné peut avoir également un profil lisse ou denté et le rail peut avoir un profil lisse ou un profil denté de crémaillère. Dans le cas où l'entraînement se fait par friction, on peut améliorer la friction par des traitements de surface appropriés.

**Revendications**

1. Installation de transfert comportant un circuit fermé de rails, au moins une palette agencée pour se déplacer sur ce circuit, au moins une courroie d'entraînement agencée pour mouvoir ladite palette sur ledit circuit, cette palette comportant au moins deux roues d'entraînement à axes perpendiculaires au plan de la palette, ces roues étant d'une part en contact avec ladite courroie d'entraînement, et d'autre part en appui contre un rail dudit circuit, caractérisée en ce que lesdites roues d'entraînement comportent chacune au moins un axe intérieur (24) fixé à la palette (14) perpendiculairement à son plan, un galet entraîneur (30) monté en rotation libre sur cet axe et agencé pour être en contact avec ladite courroie (16), un palier (36) monté sur ledit galet entraîneur (30) et un galet entraîné (35) monté à la périphérie dudit palier et agencé pour être en appui contre ledit rail (11).

2. Installation selon la revendication 1, caractérisée en ce que la courroie (16) est lisse et de section circulaire et en ce que le galet entraîneur (30) comporte une gorge (30c) dont le profil correspond à la forme de la section circulaire de ladite courroie.

3. Installation selon la revendication 1, caractérisée en ce que le galet entraîneur (30) comporte une gorge agencée pour recevoir ladite courroie (16) et en ce que ladite gorge est pourvue de cannelures.

4. Installation selon la revendication 1, caractérisée en ce que la courroie (16) est crantée et en ce que le galet entraîneur (30) comporte des dents dont le profil correspond aux crans de la courroie.

5. Installation selon la revendication 1, caractérisée en ce que le rail (11) présente un profil denté de crémaillère et en ce que le galet entraîné (35) comporte des dents agencées pour engrener celles du rail.

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A- 399 309 (BAJULAZ) <br> * En entier * <br> --- | 1,2 | B 65 G 19/02 <br> B 65 G 35/06 |
| A | EP-A-0 223 683 (PRODEL) <br> * Page 1, lignes 1-9; page 2, ligne 37 - page 3, ligne 26; page 8, ligne 17 - page 11, ligne 29; figures 1-5,14-20 * <br> --- | 1,2 | |
| A | FR-A-2 581 046 (GENERALE DE TRAVAUX MONTAGE INDUSTRIEL) <br> * Résumé; page 1, lignes 1-5,27-33; page 2, ligne 31 - page 3, ligne 13; page 5, ligne 6 -page 6, ligne 22; page 7, ligne 10 - page 8, ligne 15 * <br> --- | 1 | |
| A | GB-A-2 137 156 (STIWA-FERTIGUNGSTECHNIK STICHT GmbH) <br> * Page 1, lignes 3-14; page 3, lignes 27-33,61-94,105-122; page 4, lignes 56-69; page 5, ligne 125 - page 6, ligne 26; figures * <br> --- | 1 | DOMAINES TECHNIQUES RECHERCHES (Int. Cl.5) |
| A | US-A-4 279 337 (KACHNIK) <br> * Colonne 1, ligne 65 - colonne 2, ligne 21; colonne 2, lignes 34-57; figures * <br> ----- | 4,5 | B 65 G <br> B 23 Q <br> B 61 B |

Le présent rapport a été établi pour toutes les revendications

| Lieu de la recherche | Date d'achèvement de la recherche | Examinateur |
|---|---|---|
| LA HAYE | 08-02-1990 | VAN DER ZEE W.T. |